# FASCICULE DE BREVET EUROPEEN

(11) **EP 3 795 422 B1**
(45) Date de publication et mention de la délivrance du brevet: **23.03.2022**
(21) Numéro de dépôt: 20194540.9
(22) Date de dépôt: 04.09.2020
(51) Int. Cl.: B60Q 3/51, B60Q 3/50

(54) **ASSEMBLAGE D'UN DISPOSITIF D'ÉCLAIRAGE ET D'UN ÉLÉMENT DE GARNITURE D'UN VÉHICULE AUTOMOBILE**
ANORDNUNG EINER BELEUCHTUNGSVORRICHTUNG UND EIN BELAGELEMENT FÜR EIN KRAFTFAHRZEUG
ASSEMBLY OF A LIGHTING DEVICE AND A TRIM ELEMENT FOR A MOTOR VEHICLE

(30) Priorité: 23.09.2019 FR 1910439
(43) Date de publication de la demande: 24.03.2021
(73) Titulaire: Renault s.a.s, 92100 Boulogne Billancourt (FR)
(72) Inventeur: CHABASSOL, Ludovic, 28210 COULOMBS (FR)
(74) Mandataire: Renault Group

(56) Documents cités:
- US-A1- 2008 198 606
- US-A1- 2015 010 345

## Description

L'invention a pour objet un assemblage d'un dispositif d'éclairage et d'un élément de garniture d'un véhicule automobile. L'invention est particulièrement adaptée aux dispositifs d'éclairage fixés sur un élément de garniture de type garniture de pavillon.

Dans l'habitacle d'un véhicule automobile, certains objets sont emboîtés sur des éléments de garniture. C'est le cas par exemple des dispositifs d'éclairage, notamment les liseuses, emboîtés sur les garnitures de pavillon. Ces objets emboîtés sont souvent soumis à des contraintes lors des déploiements des airbags. Malgré ces contraintes, aucune pièce ne doit s'éjecter lors du déploiement airbag. US 2008/198.606 divulgue un assemblage selon le préambule de la revendication 1.

Il existe donc un besoin pour un assemblage évitant l'éjection d'une partie visible d'un objet fixé à un élément de garniture par emboîtage, notamment de manière sûre et dans un encombrement minimal.

Un premier objet de l'invention concerne un assemblage d'un dispositif d'éclairage et d'un élément de garniture d'un véhicule automobile. L'élément de garniture présente une partie de réception plane percée d'un orifice. Le dispositif d'éclairage comprend un boîtier lumineux équipé d'une partie de fixation pourvue d'organes d'emboîtage en prise au travers de l'orifice avec des organes d'emboîtage d'une bague de fixation pour fixer le boîtier à l'élément de garniture, la partie de fixation du boîtier et la bague de fixation étant situées de part et d'autre de la partie de réception de l'élément de garniture, en appui contre des faces opposées de cette dernière.

L'assemblage selon l'invention comprend une plaque de verrouillage appliquée du côté du boîtier contre la partie de réception de l'élément de garniture sur le pourtour de son orifice, le boîtier étant en appui sur cette plaque de verrouillage. De plus, la bague de fixation comprend au moins deux doigts de verrouillage traversant l'orifice en direction du boîtier, une extrémité libre de chaque doigt de verrouillage étant en appui sur la plaque de verrouillage.

Par cet agencement particulier, les doigts de verrouillage, avantageusement distants l'un de l'autre, prennent appui sur la plaque de verrouillage et non sur l'élément de garniture, lequel est généralement en un matériau susceptible de se déformer. Ainsi, en cas de déformation de l'élément de garniture, par exemple lors du déploiement d'un air bag, les doigts de verrouillage restent en appui sur la plaque de verrouillage, assurant la robustesse de l'assemblage.

Avantageusement, l'extrémité libre de chaque doigt de verrouillage peut aussi être en appui contre une face du boîtier s'étendant parallèlement ou sensiblement parallèlement au plan de la partie de réception. Ceci permet de favoriser le maintien de l'extrémité du doigt de verrouillage en appui contre la plaque de verrouillage, notamment suivant une direction perpendiculaire au plan de la partie de réception. Cette face du boîtier peut former le fond d'une dépression creusée sur une face du boîtier dirigée vers l'élément de garniture. Cette dépression peut former un logement pour l'extrémité libre d'un doigt de verrouillage, de dimensions choisies pour bloquer le déplacement de l'extrémité libre dans une direction l'éloignant de la plaque de verrouillage dans le plan de celle-ci et/ou perpendiculairement à celle-ci.

Avantageusement, chaque doigt de verrouillage peut s'étendre au travers de l'orifice entre un bord de l'orifice et la partie de fixation, en appui contre cette dernière. Cet agencement permet de bloquer un déplacement des doigts de verrouillage vers le centre de l'orifice, favorisant le maintien de leur extrémité en appui contre la plaque de verrouillage.

De manière générale, la plaque peut de préférence être une plaque plane.

Avantageusement, la plaque de verrouillage peut être une plaque rigide, non déformable, notamment non déformable sous l'effet de son propre poids et/ou sous l'effet d'une force prédéterminée. Ainsi, la plaque n'est pas susceptible de se déformer si l'élément de garniture se déforme, par exemple lors du déploiement d'un airbag, favorisant le maintien de l'assemblage.

La plaque de verrouillage peut ainsi être en métal, alliage métallique ou en un matériau polymère dur.

Avantageusement, la distance entre la bague de fixation et le boîtier peut être inférieure à l'épaisseur de la partie de réception du boîtier. Ceci permet de pincer l'élément de garniture entre le boîtier et la bague de fixation et d'écraser localement un élément de garniture. Ce pincement peut participer au maintien de l'assemblage.

Avantageusement, un bord libre d'extrémité de la partie de fixation du boîtier peut être en butée contre une face d'appui de la bague de fixation, notamment une face d'appui parallèle ou sensiblement parallèle au plan de la partie de réception de l'élément de garniture. Ceci peut permettre d'améliorer la robustesse de l'assemblage.

Avantageusement, la partie de fixation peut comprendre une (ou être formée d'une) paroi s'étendant sensiblement perpendiculairement ou perpendiculairement au plan de la partie de réception au travers d'une partie au moins de l'orifice, les organes d'emboîtage étant solidaires de cette paroi. Dans ce mode de réalisation, les organes d'emboîtage et les doigts de verrouillage de la bague de fixation s'étendent de préférence en direction du boîtier entre la paroi de la partie de fixation et un bord de l'orifice. Ceci permet de réaliser un assemblage compact, en laissant libre un volume délimité par la paroi de la partie de fixation, cette dernière pouvant s'étendre en regard d'un bord de l'orifice sur toute sa périphérie.

Notamment, la paroi peut s'étendre à proximité d'un bord de l'orifice. Ceci permet notamment d'équiper le boîtier d'une surface translucide ou transparente délimitée par ladite paroi.

Avantageusement, la partie de fixation et la bague de fixation peuvent comporter chacune au moins un organe choisi parmi un organe de détrompage et un organe d'indexage afin de faciliter le montage de l'assemblage. De tels organes peuvent également être prévus sur la plaque de verrouillage et/ou sur la partie de réception de l'élément de garniture.

L'invention concerne également un véhicule automobile comportant un assemblage selon l'invention. Notamment, l'élément de garniture peut être une garniture de pavillon.

L'invention est maintenant décrite en référence aux dessins annexés, non limitatifs, dans lesquels :
[Fig. 1] la figure 1 représente une vue en perspective éclatée des différentes pièces de l'assemblage selon un mode de réalisation de l'invention,
[Fig. 2] la figure 2 représente une vue en perspective du boîtier et de la bague de fixation positionnée sur l'élément de garniture,
[Fig. 3] la figure 3 est une vue en coupe transversale de l'assemblage.

Par sensiblement parallèle, perpendiculaire ou à angle droit, on entend une direction/un angle s'écartant d'au plus ±20°, voire d'au plus 10°ou d'au plus 5° d'une direction parallèle, perpendiculaire ou d'un angle droit.

Les figures représentent un assemblage 10 d'un dispositif d'éclairage 20 et d'un élément de garniture 30 d'un véhicule automobile.

L'élément de garniture 30 est destiné à cacher la structure métallique du véhicule du côté de l'habitacle de celui-ci. En général, un élément de garniture est en matériau polymère d'épaisseur relativement faible, inférieure à 10mm, par exemple de 4mm à 8mm. Les éléments de garniture d'un habitacle de véhicule automobile peuvent recevoir des objets emboîtés, tels que des crochets, des poignées, ou encore des dispositifs d'éclairage, comme dans la présente invention. Sous l'effet d'un choc, ou lors du déploiement d'un airbag, ces éléments de garniture sont susceptibles de se déformer, ce qui peut provoquer l'éjection d'une partie de l'objet emboîté située à l'intérieur de l'habitacle.

Un élément de garniture présente de manière usuelle une surface assez grande, sa forme épousant ou suivant la forme de la structure du véhicule. Sur les figures, pour des raisons de simplification, seule la partie de réception plane 32 de l'élément d'étanchéité 30 percée d'un orifice 34 est représentée. Cette partie de réception 32 est la partie qui va recevoir en appui le dispositif d'éclairage 20.

Le dispositif d'éclairage 20 comprend un boîtier 21, de type boîtier lumineux, à l'intérieur duquel est logé une source lumineuse apte à générer un faisceau lumineux (non représenté). De manière usuelle, cette source lumineuse peut être une lampe, une ou plusieurs diodes ou similaire, alimentée en électricité par un élément de connectique habituellement également logé à l'intérieur du boîtier, sur un bord de celui-ci pour permettre son branchement.

Le boîtier 21 est équipé d'une partie de fixation 22 pourvue d'organes d'emboîtage 23. Ceux-ci viennent en prise au travers de l'orifice 34 avec des organes d'emboîtage 41 d'une bague de fixation 40 disposée de l'autre côté de l'élément de garniture 30 par rapport au boîtier. Ainsi, la fixation du boîtier 21 à l'élément de garniture 30 est assurée par la mise en prise des organes d'emboîtage 23, 41 au travers de l'orifice 34, l'élément de garniture 30 étant pris en sandwich entre la partie de fixation 22 du boîtier et la bague de fixation 40. Autrement dit, la partie de fixation 22 du boîtier et la bague de fixation 40 sont situées de part et d'autre de la partie de réception 32 de l'élément de garniture 30, en appui contre des faces opposées de cette dernière. Dans l'exemple, ces pièces s'emboîtent suite à un déplacement suivant une direction perpendiculaire ou sensiblement perpendiculaire au plan de la partie de réception 32.

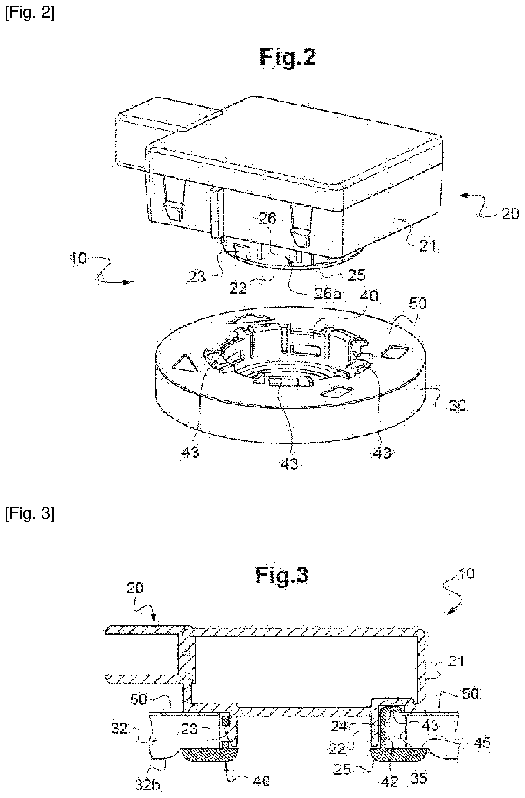

L'assemblage 10 selon l'invention comprend enfin une plaque de verrouillage 50 située du côté du boîtier 21 et appliquée contre la partie de réception 32 de l'élément de garniture 30. Tel que visible plus particulièrement sur la figure 2, la plaque de verrouillage 50 recouvre au moins en partie la face 32a de la partie de réception 32 située du côté du boîtier 21. Notamment, la plaque de verrouillage 50 recouvre suffisamment la face 32a de la partie de réception 32 pour que le boîtier 21 repose sur la plaque de verrouillage et non directement sur la partie de réception 32.

La plaque de verrouillage 50 présente ainsi également un orifice 51 dont les dimensions sont au plus égales aux dimensions de l'orifice 34, voire inférieures afin d'augmenter la surface d'appui du boîtier sur la plaque de verrouillage. Ainsi, la plaque de verrouillage 50 s'étend jusqu'au bord 35 de l'orifice 34, voire au-delà de ce bord en direction du centre de l'orifice 34. Dans l'exemple, seules certaines parties 52 de l'orifice 51 de la plaque de verrouillage sont de dimensions inférieures aux dimensions de l'orifice 34. Elles sont positionnées au droit des organes d'emboîtage de la bague de fixation et de la partie de réception.

Dans la position assemblée représentée en coupe figure 3, le boîtier 21 est ainsi en appui sur cette plaque de verrouillage 50. Ici, une face inférieure 27 du boîtier 21, portant la partie de fixation 22 et s'étendant sur le pourtour de celle-ci, est en appui sur la plaque de verrouillage 50.

La bague de fixation 40 présente par ailleurs au moins deux doigts de verrouillage 42 traversant l'orifice 34 en direction du boîtier 21. Une extrémité libre 43 de chaque doigt de verrouillage 42 est alors en appui sur la plaque de verrouillage 50, sur la face de celle-ci dirigée vers le boîtier 21. Ainsi, les extrémités libres 43 des doigts de verrouillage s'étendent dans un plan parallèle ou sensiblement parallèle au plan de la partie de réception 32 de l'élément de garnissage 30. Dans l'exemple, ces doigts de verrouillage 42 présentent une forme générale en L inversé, dont la partie horizontale forme l'extrémité 43.

Dans le mode de réalisation représenté, cinq doigts de verrouillage sont prévus, situés sensiblement à équidistance les uns des autres. L'invention n'est pas limitée par le nombre et la disposition des doigts de verrouillage. Il est toutefois préférable de prévoir au moins deux doigts de verrouillage, voire au moins trois, de préférence situés à distance les uns des autres.

Dans l'exemple, chaque doigt de verrouillage 42 est également en appui contre une face 24 du boîtier 21, notamment une face parallèle ou sensiblement parallèle au plan de la partie de réception 32 de l'élément de garnissage 30. Dans l'exemple, cette face 24 forme le fond d'une dépression 29 creusée sur la face inférieure 27 du boîtier. Cette dépression forme un logement pour l'extrémité libre 43 d'un doigt de verrouillage, dont les dimensions sont choisies pour bloquer le déplacement de l'extrémité libre dans une direction l'éloignant de la plaque de verrouillage dans le plan de celle-ci et perpendiculairement à celle-ci. L'extrémité libre de chaque doigt de verrouillage est ainsi maintenue fermement dans une position dans laquelle il est en appui sur la plaque de verrouillage 50.

En outre, chaque doigt de verrouillage 42 s'étend au travers de l'orifice 34 entre un bord 35 de ce dernier et la partie de fixation 22 du boîtier 21, chaque doigt de verrouillage 42 étant en appui contre la partie de fixation 22 du boîtier 21. On notera dans l'exemple que la partie 22 s'étend dans le prolongement d'un bord de la dépression 29 (suivant une direction sensiblement perpendiculaire à la face inférieure 27).

On comprend ainsi que lorsque les organes d'emboîtage du boîtier de la bague de fixation sont en prise, chaque doigt de verrouillage est bloqué :
- en translation suivant une direction perpendiculaire au plan de la partie de réception par la plaque de verrouillage 50 et la face 24 du boîtier,
- en translation en direction du centre de l'orifice 34 par la partie de fixation 22 du boîtier 21 et la dépression 29,
- en translation en direction du bord de l'orifice 34 par la dépression 29.

Cette configuration particulière permet d'obtenir un assemblage particulièrement robuste.

Cette robustesse peut être améliorée en réalisant la plaque de verrouillage en un matériau rigide (dur), non déformable, par exemple en métal, alliage métallique, ou matériaux polymères durs (polypropylène, etc.).

Un bord libre d'extrémité 25 du boîtier 21 peut également être en butée contre une face d'appui 45 de la bague de fixation 40. Cette face d'appui 45 est par exemple une face étendant dans un plan parallèle ou sensiblement parallèle au plan de la partie de réception 32 de l'élément de garniture 30. Dans l'exemple, les organes d'emboîtage 41 et les doigts de verrouillage 42 sont solidaires de cette face d'appui 45 et sont agencés sensiblement perpendiculairement ou perpendiculairement à celle-ci.

Dans le mode de réalisation représenté, la partie de fixation 22 du boîtier 21 est formée d'une paroi 26 s'étendant perpendiculairement ou sensiblement perpendiculairement au plan de la partie de réception 32 au travers d'une partie au moins de l'orifice 34. Dans l'exemple, cette paroi 26, ici de forme cylindrique, s'étend en regard du bord 35 de l'orifice 34 (lui-même cylindrique) sur toute sa périphérie, sensiblement parallèlement au bord de ce dernier. On notera toutefois que l'orifice 34 peut présenter toute autre forme non cylindrique (forme de section carrée, rectangulaire, hexagonale,...), la paroi 26 présentant alors une forme similaire.

Tel que représenté, les organes d'emboîtage 41 et les doigts de verrouillage 42 de la bague de fixation 40 s'étendent en direction du boîtier entre la paroi 26 de la partie de fixation et le bord 35 de l'orifice.

Dans l'exemple, les organes d'emboîtage 41 de la bague de fixation 40 sont des orifices 41 ménagés au travers de parois 46 s'étendant perpendiculairement ou sensiblement perpendiculairement à la surface d'appui 45 de la bague de fixation. Les organes d'emboîtage 23 de la partie de fixation 22 du boîtier 21 sont quant à eux des protubérances 23 qui viennent s'insérer dans les orifices 41 de la bague de fixation (figures 2 et 3). Ces protubérances 23 sont ainsi solidaires d'une face externe 26a de la paroi 26 en regard du bord 35 de l'orifice 34.

Bien entendu, l'invention n'est pas limitée par la forme et l'agencement des organes d'emboîtage pourvu qu'ils puissent être en prise et assurer l'assemblage du boîtier à l'élément de garniture 30. Notamment, la bague de fixation 40 pourrait présenter des organes d'emboîtage sous forme de protubérances, et la partie de fixation 22 du boîtier pourrait présenter des orifices agencés pour recevoir ces protubérances. Toutefois, dans l'exemple représenté, la paroi 26 de la partie de fixation 22 présente une face interne 26b lisse, non percée, tel que visible depuis le centre de l'orifice, mais aussi de l'habitacle, offrant ainsi un bon aspect visuel depuis habitacle. Cette paroi 26 peut notamment servir à délimiter une partie de paroi 27a de la paroi inférieure 27 qui est transparente ou translucide pour laisser passer les rayons lumineux de la source lumineuse.

On notera enfin que la distance (mesurée perpendiculairement à la partie de réception 32 du boîtier) entre la bague de fixation et le boîtier lorsque les organes d'emboîtage sont en prise est inférieure à l'épaisseur (mesurée dans la même direction) de la partie de réception 32 du boîtier provoquant un écrasement de celui-ci. Un tel écrasement, par exemple de l'ordre de 1 à 2 mm, assure une bonne fixation du boîtier à l'élément de garniture 30 par la prise en sandwich de de ce dernier.

Enfin, pour faciliter l'assemblage des différents éléments, la partie de fixation 22 du boîtier 21 et la bague de fixation 40 peuvent comporter chacun au moins un organe choisi parmi un organe de détrompage et un organe de guidage ou assurant les deux fonctions. Dans l'exemple, la partie de fixation 22 comprend des nervures 28 sur sa face externe 26a servant d'organes de détrompage et de guidage et venant s'insérer de part et d'autre des parois 46 de la bague de fixation 40.

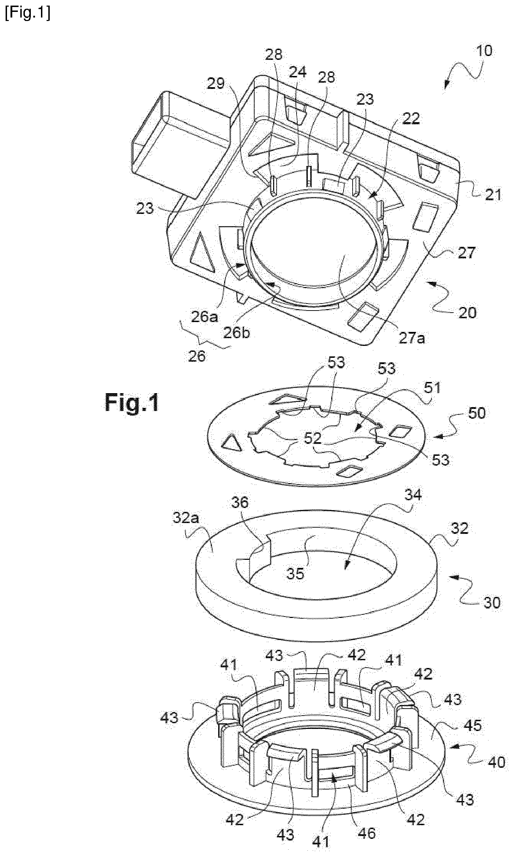

De tels organes peuvent également être prévus sur le la plaque de verrouillage 50, par exemple par une découpe particulière de son bord interne (voir références 53 sur la figure 1), voire également sur la partie de réception 32 de l'élément de garniture, également par une découpe particulière du bord 35 de l'orifice 34, tel que repéré par la référence 36 sur la figure 1.

L'assemblage selon la présente invention peut-être monté de la manière suivante. Dans un premier temps, la plaque de verrouillage 50 est posée sur la face 32a de la partie de réception 32 de l'élément de garniture située du côté du boîtier 21. Puis, la bague de fixation 40 est mise en place du côté opposé tel que représenté figure 2. Dans cette position, la plaque de verrouillage 50 est maintenue contre la face 32a de l'élément de garniture 30 via les doigts de verrouillage 42 dont l'extrémité 43 est en appui contre la plaque de verrouillage. Le boîtier 21 peut alors être approché de la partie de réception 32 de l'élément de garnissage suivant une direction perpendiculaire au plan de cette dernière, sa partie de fixation 22 étant introduite dans l'orifice 34 jusqu'à mise en prise des organes d'emboîtage 23 avec les organes d'emboîtage 41 de la bague de fixation 40. L'extrémité 43 de chaque doigt de verrouillage 42 est alors en appui contre la plaque de verrouillage 50 et maintenue dans cette position d'appui par contact avec la surface 24 et la partie de fixation 22 du boîtier.

## Revendications

1. Assemblage (10) d'un dispositif d'éclairage (20) et d'un élément de garniture (30) d'un véhicule automobile, dans lequel :
- l'élément de garniture (30) présente une partie de réception (32) plane percée d'un orifice (34),
- le dispositif d'éclairage (20) comprend un boîtier lumineux (21) équipé d'une partie de fixation (22) pourvue d'organes d'emboîtage (23) en prise au travers de l'orifice (34) avec des organes d'emboîtage (41) d'une bague de fixation (40) pour fixer le boîtier à l'élément de garniture, la partie de fixation (22) du boîtier et la bague de fixation (40) étant situées de part et d'autre de la partie de réception (32) de l'élément de garniture, en appui contre des faces opposées de cette dernière, l'assemblage comprenant une plaque de verrouillage (50) appliquée du côté du boîtier (22) contre la partie de réception (32) de l'élément de garniture sur le pourtour de son orifice, le boîtier (22) étant en appui sur cette plaque de verrouillage, **caractérisé en ce que** la bague de fixation (40) comprend au moins deux doigts de verrouillage (42) traversant l'orifice (34) en direction du boîtier, une extrémité libre (43) de chaque doigt de verrouillage (42) étant en appui sur la plaque de verrouillage (50).

2. Assemblage (10) selon la revendication 1, **caractérisé en ce que** l'extrémité libre (43) de chaque doigt de verrouillage (42) est aussi en appui contre une face (24) du boîtier s'étendant parallèlement ou sensiblement parallèlement au plan de la partie de réception (32).

3. Assemblage (10) selon la revendication 1 ou 2, **caractérisé en ce que** chaque doigt de verrouillage (42) s'étend au travers de l'orifice (34) entre un bord (35) de l'orifice et la partie de fixation (22), en appui contre cette dernière.

4. Assemblage (10) selon l'une quelconque des revendications 1 à 3, **caractérisé en ce que** la plaque de verrouillage (50) est une plaque rigide, non déformable.

5. Assemblage (10) selon l'une quelconque des revendications 1 à 4, **caractérisé en ce que** la distance entre la bague de fixation (40) et le boîtier (20) est inférieure à l'épaisseur de la partie de réception (32) du boîtier.

6. Assemblage (10) selon l'une quelconque des revendications 1 à 5, **caractérisé en ce qu'**un bord libre d'extrémité (25) de la partie de fixation du boîtier est en butée contre une face d'appui (45) de la bague de fixation (40).

7. Assemblage (10) selon l'une quelconque des revendications 1 à 6, **caractérisé en ce que** la partie de fixation (22) comprend une paroi (26) s'étendant sensiblement perpendiculairement au plan de la partie de réception (22) au travers d'une partie au moins de l'orifice, les organes d'emboîtage (23) étant solidaires de cette paroi (26).

8. Assemblage (10) selon la revendication 7, **caractérisé en ce que** les organes d'emboîtage (41) et les doigts de verrouillage (42) de la bague de fixation s'étendent en direction du boîtier (21) entre la paroi (26) de la partie de fixation et un bord (35) de l'orifice.

9. Assemblage (10) selon l'une quelconque des revendications 1 à 8, **caractérisé en ce que** la partie de fixation (22) et la bague de fixation (40) comportent chacune au moins un organe choisi parmi un organe de détrompage (28) et un organe d'indexage (28).

10. Véhicule automobile comportant un assemblage (10) selon l'une quelconque des revendications 1 à 9.

## Patentansprüche

1. Anordnung (10) einer Beleuchtungsvorrichtung (20) und eines Verkleidungselements (30) eines Kraftfahrzeugs, wobei:
- das Verkleidungselement (30) ein ebenes Aufnahmeteil (32) mit einer durchgehenden Öffnung (34) aufweist,
- die Beleuchtungsvorrichtung (20) ein Leuchtgehäuse (21) umfasst, das mit einem Befestigungsteil (22) ausgestattet ist, das mit Einsteckorganen (23) versehen ist, die durch die Öffnung (34) mit Einsteckorganen (41) eines Befestigungsrings (40) in Eingriff stehen, um das Gehäuse am Verkleidungselement zu befestigen, wobei das Befestigungsteil (22) des Gehäuses und der Befestigungsring (40) auf beiden Seiten des Aufnahmeteils (32) des Verkleidungselements angeordnet sind und auf gegenüberliegenden Seiten desselben anliegen, wobei die Anordnung eine Verriegelungsplatte (50) umfasst, die auf der Seite des Gehäuses (22) gegen das Aufnahmeteil (32) des Verkleidungselements über den Umfang seiner Öffnung angeordnet ist, wobei das Gehäuse (22) an dieser Verriegelungsplatte anliegt, **dadurch gekennzeichnet, dass** der Befestigungsring (40) zumindest zwei Verriegelungsfinger (42) umfasst, die sich durch die Öffnung (34) in Richtung des Gehäuses erstrecken, wobei ein freies Ende (43) jedes Verriegelungsfingers (42) an der Verriegelungsplatte (50) anliegt.

2. Anordnung (10) nach Anspruch 1, **dadurch gekennzeichnet, dass** das freie Ende (43) jedes Verriegelungsfingers (42) auch an einer Seite (24) des Gehäuses anliegt, die sich parallel oder im Wesentlichen parallel zur Ebene des Aufnahmeteils (32) erstreckt.

3. Anordnung (10) nach Anspruch 1 oder 2, **dadurch gekennzeichnet, dass** sich jeder Verriegelungsfinger (42) durch die Öffnung (34) hindurch zwischen einer Kante (35) der Öffnung und dem Befestigungsteil (22) erstreckt und an diesem anliegt.

4. Anordnung (10) nach einem der Ansprüche 1 bis 3, **dadurch gekennzeichnet, dass** die Verriegelungsplatte (50) eine nicht verformbare starre Platte ist.

5. Anordnung (10) nach einem der Ansprüche 1 bis 4, **dadurch gekennzeichnet, dass** der Abstand zwischen dem Befestigungsring (40) und dem Gehäuse (20) kleiner als die Dicke des Aufnahmeteils (32) des Gehäuses ist.

6. Anordnung (10) nach einem der Ansprüche 1 bis 5, **dadurch gekennzeichnet, dass** eine freie Endkante (25) des Befestigungsteils des Gehäuses an einer Anlagefläche (45) des Befestigungsrings (40) anliegt.

7. Anordnung (10) nach einem der Ansprüche 1 bis 6, **dadurch gekennzeichnet, dass** das Befestigungsteil (22) eine Wand (26) umfasst, die sich im Wesentlichen senkrecht zur Ebene des Aufnahmeteils (22) durch zumindest einen Teil der Öffnung hindurch erstreckt, wobei die Einsteckorgane (23) fest mit dieser Wand (26) verbunden sind.

8. Anordnung (10) nach Anspruch 7, **dadurch gekennzeichnet, dass** sich die Einsteckorgane (41) und die Verriegelungsfinger (42) des Befestigungsrings in Richtung des Gehäuses (21) zwischen der Wand (26) des Befestigungsteils und einer Kante (35) der Öffnung erstrecken.

9. Anordnung (10) nach einem der Ansprüche 1 bis 8, **dadurch gekennzeichnet, dass** das Befestigungsteil (22) und der Befestigungsring (40) jeweils zumindest ein Organ aufweisen, das aus einem Verwechselungssicherungsorgan (28) und einem Indexierungsorgan (28) ausgewählt ist.

10. Kraftfahrzeug mit einer Anordnung (10) nach einem der Ansprüche 1 bis 9.

## Claims

1. Assembly (10) of a lighting device (20) and a trim element (30) of a motor vehicle, wherein:
- the trim element (30) has a flat receiving part (32) with an orifice (34) passing through it,
- the lighting device (20) comprises a light housing (21) equipped with a fastening part (22) provided with interlocking members (23) engaged through the orifice (34) with interlocking members (41) of a fastening ring (40) so as to fasten the housing to the trim element, the fastening part (22) of the housing and the fastening ring (40) being situated on either side of the receiving part (32) of the trim element, bearing against opposing faces of the latter, the assembly comprising a locking plate (50) pressed alongside the housing (22) against the receiving part (32) of the trim element on the periphery of its orifice, the housing (22) bearing on this locking plate, **characterized in that** the fastening ring (40) comprises at least two locking fingers (42) passing through the orifice (34) in the direction of the housing, a free end (43) of each locking finger (42) bearing on the locking plate (50).

2. Assembly (10) according to Claim 1, **characterized in that** the free end (43) of each locking finger (42) also bears against a face (24) of the housing that extends parallel or substantially parallel to the plane of the receiving part (32).

3. Assembly (10) according to Claim 1 or 2, **characterized in that** each locking finger (42) extends through the orifice (34) between an edge (35) of the orifice and the fastening part (22), bearing against the latter.

4. Assembly (10) according to any one of Claims 1 to 3, **characterized in that** the locking plate (50) is a rigid, non-deformable plate.

5. Assembly (10) according to any one of Claims 1 to 4, **characterized in that** the distance between the fastening ring (40) and the housing (20) is smaller than the thickness of the part (32) for receiving the housing.

6. Assembly (10) according to any one of Claims 1 to 5, **characterized in that** a free end edge (25) of the fastening part of the housing is in abutment against a bearing face (45) of the fastening ring (40).

7. Assembly (10) according to any one of Claims 1 to 6, **characterized in that** the fastening part (22) comprises a wall (26) extending substantially perpendicular to the plane of the receiving part (22) through at least part of the orifice, the interlocking members (23) being as one with this wall (26).

8. Assembly (10) according to Claim 7, **characterized in that** the interlocking members (41) and the locking fingers (42) of the fastening ring extend in the direction of the housing (21) between the wall (26) of the fastening part and an edge (35) of the orifice.

9. Assembly (10) according to any one of Claims 1 to 8, **characterized in that** the fastening part (22) and the fastening ring (40) each have at least one member chosen from a foolproofing member (28) and an indexing member (28) .

10. Motor vehicle having an assembly (10) according to any one of Claims 1 to 9.
